# EUROPEAN PATENT APPLICATION

(11) **EP 4 494 456 A1**
(43) Date of publication of application: **22.01.2025**
(21) Application number: 23791856.0
(22) Date of filing: 18.04.2023
(51) Int. Cl.: A01G 23/00, G06Q 50/02

(54) **REFORESTATION PLANNING DEVICE, REFORESTATION SYSTEM, AND REFORESTATION PLANNING METHOD**

(30) Priority: 19.04.2022 JP 2022068972
(71) Applicant: Komatsu Ltd., Minato-ku Tokyo 107-8414 (JP)
(72) Inventor: TOGASHI Ryoichi, Tokyo 107-8414 (JP); UENO Mitsuru, Tokyo 107-8414 (JP)
(74) Representative: Global IP Europe Patentanwaltskanzlei
(86) International application number: PCT/JP2023/015458
(87) International publication number: WO 2023/204208

(57) **Abstract**

A data acquisition unit acquires terrain data representing a terrain of a target area. An area specification unit specifies a first area having a gradient less than a first gradient threshold value from the target area based on the terrain data. A reforestation instruction unit transmits a reforestation instruction signal for instructing planting of a plant body in the first area.

## Description

### [Technical Field]

The present disclosure relates to a reforestation planning device, a reforestation system, and a reforestation planning method.

Priority is claimed on Japanese Patent Application No. 2022-068972, filed April 19, 2022, the content of which is incorporated herein by reference.

### [Background Art]

Patent Document 1 discloses a technology for recognizing a terrain of a work site based on images of the work site acquired by an unmanned aircraft and planning the movement path of a forestry machine for harvest of timber.

### [Citation List]

### [Patent Document]

### [Patent Document 1]

United States Patent No. 10322803

### [Summary of Invention]

### [Technical Problem]

There is a possibility that the forestry machine slips or falls down on a terrain having a steep gradient, and in consideration of work efficiency, it is desirable that a work machine performs the harvest work on a terrain having a gentle gradient. In addition, in forestry, after reforestation, regular maintenance such as thinning is required for a long period until final felling, and it is necessary to establish a reforestation plan in consideration of future work such as maintenance and harvest.

An object of the present disclosure is to provide a reforestation planning device, a reforestation system, and a reforestation planning method for establishing a reforestation plan in consideration of future harvest according to the terrain of a target area.

### [Solution to Problem]

According to an aspect of the present disclosure, a reforestation planning device includes: a data acquisition unit configured to acquire terrain data representing a terrain of a target area; an area specification unit configured to specify a first area having a gradient less than a first gradient threshold value from the target area based on the terrain data; and a reforestation instruction unit configured to transmit a reforestation instruction signal, which is a signal for instructing planting of a plant body in a reforestation area consisting of the first area, including at least one of the reforestation area or a traveling route in the reforestation area for planting the plant body by a reforestation machine.

### [Advantageous Effects of Invention]

According to the above aspect, it is possible to establish a reforestation plan in consideration of future forest work according to the terrain of the target area.

### [Brief Description of Drawings]

FIG. 1 is a schematic diagram showing a reforestation system according to a first embodiment.
FIG. 2 is an external view of a reforestation machine according to the first embodiment.
FIG. 3 is an external view of an earthwork machine according to the first embodiment.
FIG. 4 is a schematic block diagram showing a configuration of a reforestation planning device according to the first embodiment.
FIG. 5 is a diagram showing an example of an area of a target area in the first embodiment.
FIG. 6 is a flowchart showing the process of a reforestation planning device according to the first embodiment.
FIG. 7 is a diagram showing a configuration of a cab according to a second embodiment.

### [Description of Embodiments]

### <First Embodiment>

### «Configuration of Reforestation System 1»

Hereinafter, embodiments will be described in detail with reference to the drawings.

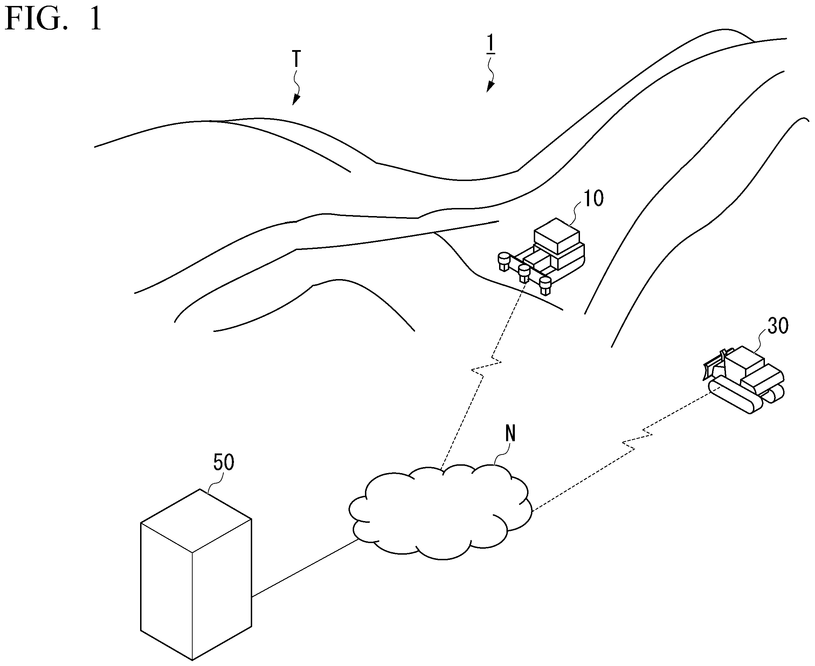

FIG. 1 is a schematic diagram showing a reforestation system 1 according to a first embodiment.

The reforestation system 1 generates a reforestation plan for a target area T based on terrain data of the target area T and executes a reforestation work in accordance with the reforestation plan.

The reforestation system 1 includes a reforestation machine 10, an earthwork machine 30, and a reforestation planning device 50. The reforestation machine 10 is a vehicle having a function of planting a plant body into soil. The earthwork machine 30 is a vehicle having a function of excavating earth. The reforestation machine 10 and the earthwork machine 30 according to the first embodiment are autonomously driven. The reforestation machine 10 and the earthwork machine 30 according to other embodiments may not be autonomously driven. The reforestation planning device 50 generates a reforestation plan for a target area based on terrain data of the target area and transmits an instruction signal to the reforestation machine 10 and the earthwork machine 30. The reforestation machine 10 and the earthwork machine 30 operate based on the instruction signal received from the reforestation planning device 50. The reforestation planning device 50, the reforestation machine 10, and the earthwork machine 30 are connected to each other via a communication network N such as the Internet. The reforestation planning device 50 may be provided remotely from the reforestation machine 10 and the earthwork machine 30.

### «Configuration of Reforestation Machine 10»

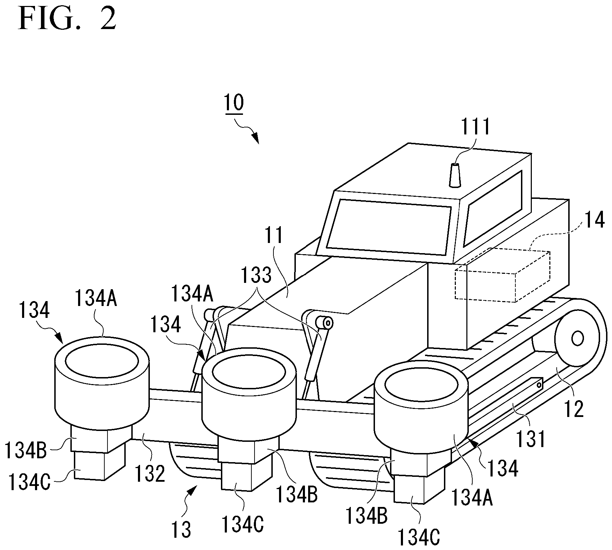

FIG. 2 is an external view of a reforestation machine 10 according to the first embodiment. The reforestation machine 10 includes a vehicle body 11, a traveling device 12, a planting device 13, and a control device 14. The reforestation machine 10 may be, for example, a bulldozer in which a blade is replaced with the planting device 13. In addition, in other embodiments, the reforestation machine 10 may use the planting device 13 as an attachment of a hydraulic excavator.

The traveling device 12 supports the vehicle body 11 to be capable of traveling. The traveling device 12 is a continuous track driven by a power of an engine. Meanwhile, in other embodiments, the traveling device 12 may include wheels and legs driven by the power of the engine.

A position measurement device 111 for measuring a position of the vehicle body 11 is provided in the vehicle body 11. The position measurement device 111 includes an antenna that receives a position measurement signal from a GNSS, and measures the position of the vehicle body 11 based on the position measurement signal received via the antenna. The position measurement device 111 outputs position data indicating the measured position to the control device 14. The position of the vehicle body 11 is represented by a two-dimensional or three-dimensional global coordinate system.

The planting device 13 plants the plant body into the soil. The planting device 13 is provided in front of the vehicle body 11. In other embodiments, the planting device 13 may be disposed behind the vehicle body 11. The planting device 13 includes an arm 131, a frame 132, a hydraulic cylinder 133, and three planting portions 134. In other embodiments, the number of planting portions 134 is not limited to three and may be less than three or more than three. The arm 131 is attached to a frame portion of the traveling device 12 and supports the planting device 13 to be capable of lifting and lowering. The frame 132 is attached to a distal end of the arm 131 and supports three planting portions 134. The hydraulic cylinder 133 is provided between a front portion of the vehicle body 11 and the frame 132, and lifts and lowers the frame 132 by expansion and contraction.

The three planting portions 134 are arranged side by side in the width direction of the reforestation machine 10. The width direction of the reforestation machine 10 is a direction orthogonal to a traveling direction of the reforestation machine 10.

The planting portion 134 includes a plant body holding unit 134A, a main body portion 134B, and an expansion and contraction portion 134C. The main body portion 134B is attached to the frame 132. The plant body holding unit 134A is provided on an upper portion of the main body portion 134B. The expansion and contraction portion 134C protrudes from a lower portion of the main body portion 134B.

The plant body holding unit 134A holds the plant body to be planted into the soil. The plant body is, for example, a seed or a seedling of a tree. The plant body holding unit 134A may hold a plurality of types of plant bodies. For example, the plant body holding unit 134A may hold a plant body suitable for wood and a plant body constituting vegetation of the target area T. The main body portion 134B takes out the plant body from the plant body holding unit 134A and transfers the plant body to a distal end of the expansion and contraction portion 134C. The expansion and contraction portion 134C expands while holding the plant body at the distal end portion to plant the plant body into the soil. The expansion and contraction portion 134C is expanded and contracted by, for example, a hydraulic cylinder. By expanding and contracting the expansion and contraction portion 134C, the plant body can be planted into the soil even when the soil is not flat and the distance between the main body portion 134B and the soil changes.

The control device 14 generates a driving signal for driving the traveling device 12 and the planting device 13, and controls actuators of the traveling device 12 and the planting device 13. The control device 14 includes a communication device that performs communication with the reforestation planning device 50 via the communication network N. The control device 14 controls the traveling device 12 and the planting device 13 based on the instruction signal received from the reforestation planning device 50 via the communication network N and the position data acquired from the position measurement device 111. The instruction signal received from the reforestation planning device 50 includes a map of the target area T, a traveling route of the reforestation machine 10, and information indicating the type of plant body, a planting range, and a planting interval. The control device 14 drives the traveling device 12 such that the reforestation machine 10 moves to the starting point of the traveling route based on the position data and the traveling route, and drives the traveling device 12 such that the reforestation machine 10 moves along the traveling route after reaching the starting point of the traveling route. In addition, the control device 14 determines whether the reforestation machine 10 is located within the planting range based on the position data, and in a case in which the reforestation machine 10 is located within the planting range, drives the planting device 13 to plant the plant body at the planting interval. For example, the control device 14 may determine the timing for performing the next planting based on the speed of the traveling device 12 and the planting interval, or may determine the position for performing the next planting based on the distance from the position indicated by the position data of the previous planting. The control device 14 does not drive the planting device 13 when the reforestation machine 10 is not located within the planting range.

### «Configuration of Earthwork Machine 30»

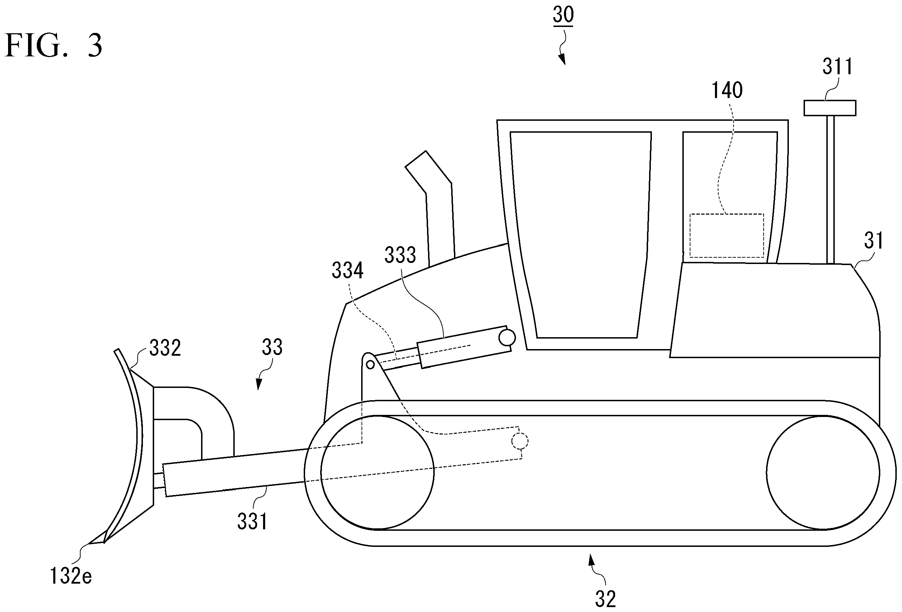

FIG. 3 is an external view of the earthwork machine 30 according to the first embodiment. The earthwork machine 30 may be, for example, a bulldozer. In addition, in other embodiments, the earthwork machine 30 may be a hydraulic excavator or a wheel loader. The earthwork machine 30 includes a vehicle body 31, a traveling device 32, work equipment 33, and a control device 34.

The traveling device 32 supports the vehicle body 31 to be capable of traveling. The traveling device 32 is a continuous track driven by a power of an engine. Meanwhile, in other embodiments, the traveling device 32 may include wheels driven by the power of the engine.

A position measurement device 311 for measuring a position of the vehicle body 31 is provided in the vehicle body 31. The position measurement device 311 includes an antenna that receives a position measurement signal from a GNSS, and measures the position of the vehicle body 31 based on the position measurement signal received via the antenna. The position measurement device 311 outputs position data indicating the measured position to the control device 34. The position of the vehicle body 31 is represented by a three-dimensional global coordinate system.

The work equipment 33 is used to excavate and transport an excavation target such as earth. The work equipment 33 is provided at a front portion of the vehicle body 31. The work equipment 33 includes a lift frame 331, a blade 332, and a lift cylinder 333.

A proximal end portion of the lift frame 331 is attached to a side surface of the vehicle body 31 through a pin extending in a vehicle width direction. A distal end portion of the lift frame 331 is attached to a back surface of the blade 332 through a spherical joint. As a result, the blade 332 is supported to be movable in an up-down direction with respect to the vehicle body 31. A blade edge 332e is provided at a lower end portion of the blade 332. The lift cylinder 333 is a hydraulic cylinder. A proximal end portion of the lift cylinder 333 is attached to the side surface of the vehicle body 31. A distal end portion of the lift cylinder 333 is attached to the lift frame 331. The lift frame 331 and the blade 332 are lifted and lowered by the lift cylinder 333 being expanded and contracted by hydraulic oil.

The lift cylinder 333 is provided with a stroke sensor 334 that measures a stroke amount of the lift cylinder 333. The stroke amount measured by the stroke sensor 334 can be converted into a position of the blade edge 332e with the vehicle body 31 as a reference. Specifically, a rotation angle of the lift frame 331 is calculated based on the stroke amount of the lift cylinder 333. Since the shapes of the lift frame 331 and the blade 332 are known, the position of the blade edge 332e of the blade 332 can be specified from the rotation angle of the lift frame 331. The earthwork machine 30 according to other embodiments may detect the rotation angle with another sensor such as an encoder.

The control device 34 generates a driving signal for driving the traveling device 32 and the work equipment 33, and controls actuators of the traveling device 32 and the work equipment 33. The control device 34 includes a communication device that performs communication with the reforestation planning device 50 via the communication network N. The control device 14 controls the traveling device 32 and the work equipment 33 based on the instruction signal received from the reforestation planning device 50 via the communication network N, the position data measured by the position measurement device 311, and the position of the blade edge 332e converted from measurement data of the stroke sensor 334. The instruction signal received from the reforestation planning device 50 includes information indicating a current state terrain of the target area T and a design plane of the target area T. The control device 14 drives the traveling device 12 such that the traveling device 12 moves toward a position where the difference in height between the current state terrain and the design plane exceeds a predetermined threshold value, based on the position data. In addition, the control device 14 determines the target height of the blade edge 332e in accordance with the difference in height between the current state terrain and the design plane at the current position indicated by the position data, and drives the lift cylinder 333 such that a height of the blade edge 332e reaches the target height. The control device 34 repeatedly executes the above control while updating the current state terrain based on the height of the blade edge 332e during traveling.

### «Configuration of Reforestation Planning Device 50»

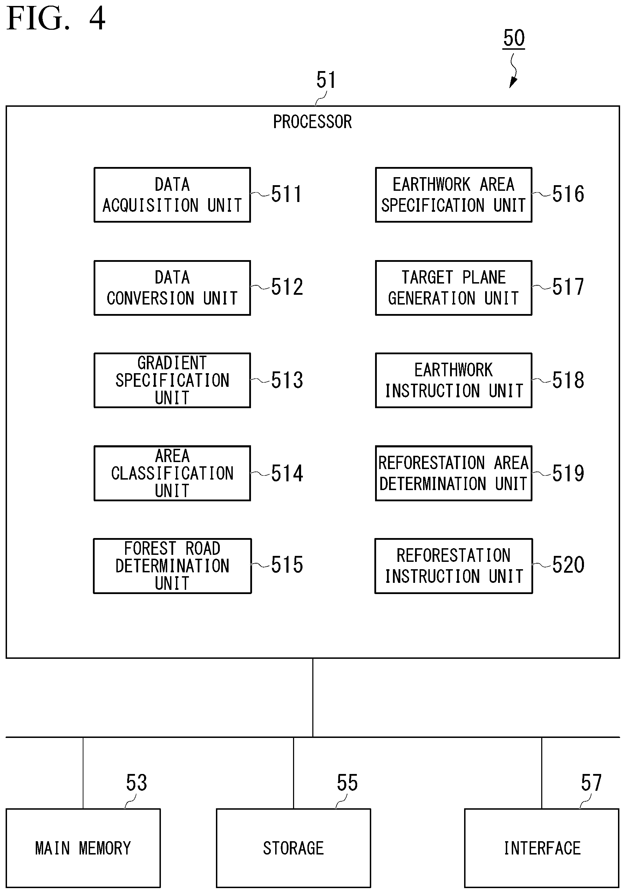

FIG. 4 is a schematic block diagram showing a configuration of the reforestation planning device 50 according to the first embodiment.

The reforestation planning device 50 is a computer including a processor 51, a main memory 53, a storage 55, and an interface 57. The storage 55 stores a program. The processor 51 reads out the program from the storage 55, loads the program in the main memory 53, and executes a process according to the program.

In other embodiments, the reforestation planning device 50 may include a custom large scale integrated circuit (LSI), such as a programmable logic device (PLD), in addition to the above-described configuration or instead of the above-described configuration. A programmable array logic (PAL), a generic array logic (GAL), a complex programmable logic device (CPLD), and a field programmable gate array (FPGA) are exemplary examples of the PLD. In this case, some or all of the functions to be realized by the processor 51 may be realized by the integrated circuit. The integrated circuit is also included in the example of the processor.

The reforestation planning device 50 is connected to the communication network N via the interface 57. In addition, the reforestation planning device 50 is connected to an input/output device (not shown) via the interface 57.

A hard disk drive (HDD), a solid state drive (SSD), a non-volatile memory, and the like are exemplary examples of the storage 55. The storage 55 may be an internal medium directly connected to a bus of the reforestation planning device 50, or may be an external medium connected to the reforestation planning device 50 via the interface 57. The storage 55 is a non-transitory tangible storage medium.

The processor 51 functions as a data acquisition unit 511, a data conversion unit 512, a gradient specification unit 513, an area classification unit 514, an earthwork area specification unit 515, a design plane generation unit 516, an earthwork instruction unit 517, a reforestation area determination unit 518, a forest road determination unit 519, and a reforestation instruction unit 520 by executing the program.

The data acquisition unit 511 acquires current state terrain data obtained from the measurement of the terrain of the target area T. The current state terrain data is represented by, for example, three-dimensional data such as point cloud data. The current state terrain data may be generated based on, for example, the history of position information of a robot that travels over the target area T. In this case, the height of the ground can be specified even when trees are growing in the target area T. The current state terrain data may be measured by a drone equipped with LiDAR or a stereo camera. When trees are not growing in the target area T, such as after the harvest in the target area T, the data measured by the drone can be used directly as the current state terrain data. Even when trees are growing in the target area T, the trees and the like can be removed from the data measured by the drone using a predetermined algorithm. The data acquisition unit 511 acquires the current state terrain data from, for example, an external memory, a robot body, or a drone body connected to the interface 57 by wired or wireless method.

The data conversion unit 512 converts the current state terrain data into mesh data. The mesh data is data in which various types of data, such as height data, are stored in each mesh (lattice) that divides the terrain using a plane lattice extending horizontally. The data conversion unit 512 converts, for example, with respect to each mesh, the point cloud data into the mesh data by setting the average value of the heights of points in the vicinity of mesh in the point cloud data as the height of the mesh. In other embodiments, the lattice of the mesh data may be a plane-fillable polygon other than a square, such as an equilateral triangle or a regular hexagon. In other embodiments, in a case in which the current state terrain data is given as the mesh data, the reforestation planning device 50 may not include the data conversion unit 512.

The gradient specification unit 513 specifies a gradient in each mesh indicated by the mesh data converted by the data conversion unit 512. The gradient specification unit 513 can specify the gradient, for example, by obtaining a normal vector (vertex normal) of the mesh. For example, the normal vector of the mesh can be obtained as follows. The gradient specification unit 513 calculates a normal vector of a line segment connecting the mesh, which is the calculation target of the normal vector, and another mesh adjacent to the mesh. Then, the normal vector of the mesh to be calculated can be obtained by obtaining a vector of the sum of the normal vectors of each of sides and normalizing the obtained vector. It can be seen that the gradient of the ground represented by the mesh is smaller as the angle between the normal vector and the vertical line (normal vector of horizontal plane) becomes smaller.

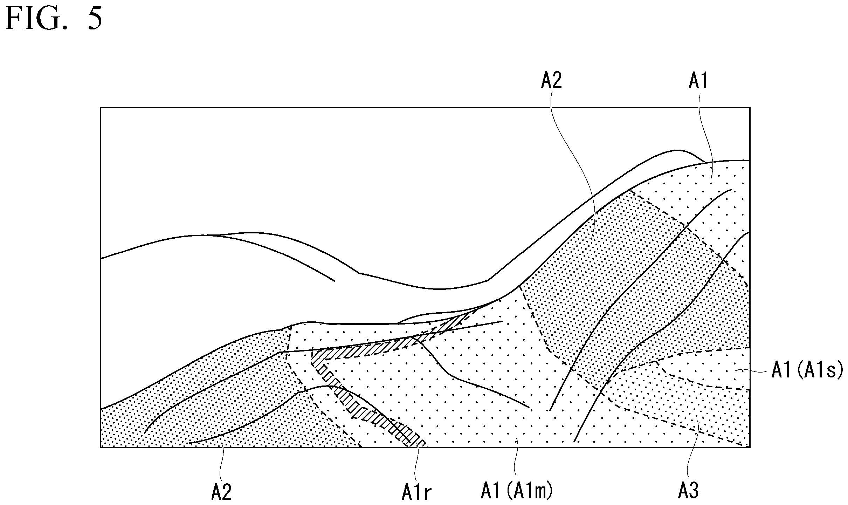

FIG. 5 is a diagram showing an example of the area of the target area T in the first embodiment. The area classification unit 514 classifies the target area T into a plurality of areas consisting of a first area A1 where a gradient is less than a first gradient threshold value and a second area A2 where a gradient is equal to or greater than the first gradient threshold value, based on the gradient of each mesh specified by the gradient specification unit 513. The first area A1 is an area where the gradient is small, which makes harvest by a forestry machine such as a feller buncher relatively easy. The second area A2 is an area where the gradient is large, which makes harvest by the forestry machine relatively difficult. The area classification unit 514 divides each mesh into a mesh where a gradient is equal to or greater than the first gradient threshold value and a mesh where a gradient is less than the first gradient threshold value. The area classification unit 514 defines a continuous ground area filled with the mesh where the gradient is equal to or greater than the first gradient threshold value as the first area A1 and defines a continuous ground area filled with the mesh where the gradient is less than the first gradient threshold value as the second area A2. The area classification unit 514 can classify the area using a labeling algorithm or the like on a binarized image. In this case, the area classification unit 514 may regard the second area A2 surrounded by the first area A1 and having a small number of meshes (equal to or less than a predetermined number) as belonging to the first area A1. Similarly, the area classification unit 514 may regard the first area A1 surrounded by the second area A2 and having a small number of meshes (equal to or less than a predetermined number) as belonging to the second area A2. The area classification unit 514 may apply other algorithms for area classification. The area classification unit 514 specifies a largest area classified into the first area A1 among the plurality of areas as a main area A1m, which is the reforestation target. In other embodiments, the area classification unit 514 may define an area, which is classified as the first area A1, closest to the existing road among the plurality of areas as the main area A1m. In addition, in other embodiments, not only the main area A1m but also other first areas A1 may be the reforestation target.

The area classification unit 514 is an example of an area specification unit that specifies the first area A1 and the second area A2 from the target area T.

The earthwork area specification unit 515 specifies a portion of the second area A2 where a gradient is less than a second gradient threshold value as a third area A3. The second gradient threshold value is larger than the first gradient threshold value. The third area A3 is an area where it is practically possible to reduce the gradient to be less than the first gradient threshold value through construction by the earthwork machine 30. For example, the earthwork area specification unit 515 defines a continuous ground portion of the second area A2 that is adjacent to the first area A1 and is filled with a mesh where a gradient is less than the second gradient threshold value as the third area A3. That is, even if the gradient is less than the second gradient threshold value, in a case in which the first area A1 is not a continuous ground after the construction, it is difficult to move the forestry machine, and thus the first area A1 is not a construction target.

The design plane generation unit 516 generates the design plane of the third area A3 such that the gradient of the third area A3 is less than the first gradient threshold value and the amount of earth to be worked is minimized. For example, the design plane generation unit 516 may generate the design plane such that all the meshes are less than the first gradient threshold value for at least the third area A3 and the amount of change (excavation amount) from the current state terrain is minimized. In addition, for example, the design plane generation unit 516 may generate the design plane such that all the meshes are less than the first gradient threshold value for at least the third area A3 and the sum of the excavation amount and the embankment amount approaches zero. In addition, for example, the design plane generation unit 516 may generate the design plane of the third area A3 such that the area of the area where the gradient is less than the first gradient threshold value after the construction is maximized. For example, the design plane generation unit 516 may generate the design plane such that all the meshes are less than the first gradient threshold value for at least the third area A3, and may further generate the design plane such that at least some of the meshes are less than the first gradient threshold value by embanking the earth to be excavated in the third area A3 for the second area A2 adjacent to the third area A3. The design plane is a plane showing a target terrain of the earthwork machine 30 after the construction.

The earthwork instruction unit 517 transmits, to the earthwork machine 30, an earthwork instruction signal for instructing the construction of the third area A3 in accordance with the design plane. The earthwork instruction signal includes the mesh data of the current state terrain generated by the data conversion unit 512 and design plane data representing the design plane generated by the design plane generation unit 516. In a case in which the data of the current state terrain can be separately acquired by the earthwork machine 30, the earthwork instruction signal may not include the mesh data of the current state terrain and may only include the design plane data.

The reforestation area determination unit 518 determines the continuous ground area consisting of the main area A1m, the third area A3, and the first area A1 (subarea A1s) adjacent to the third area A3 as the reforestation area. The subarea A1s is the first area A1 where the third area A3 is interposed between the subarea A1s and the main area A1m. In a case in which the third area A3 is constructed and the gradient is less than the first gradient threshold value, the reforestation area consisting of the main area A1m, the third area A3, and the subarea A1s is a continuous ground area that is less than the first gradient threshold value.

The forest road determination unit 519 disposes a forest road area A1r for forming a forest road for the forestry machine to pass through in the reforestation area determined by the reforestation area determination unit 518. The forest road area A1r is a band-shaped area having a predetermined width, and is provided such that the forestry machine is movable over the entire reforestation area. For example, the forest road determination unit 519 may dispose the forest road area A1r to pass through the center of the reforestation area. In this case, the forest road determination unit 519 can determine the forest road area A1r using a thinning algorithm or the like. In other embodiments, in a case in which the forest road area A1r is determined in advance, the reforestation planning device 50 may not include the forest road determination unit 519.

The reforestation instruction unit 520 transmits, to the reforestation machine 10, a reforestation instruction signal for instructing planting of a plant body in an area of the reforestation area excluding the forest road area A1r. The reforestation instruction signal includes the mesh data of the target area T, the traveling route of the reforestation machine 10, and information indicating the type of plant body, the planting depth, the planting range, the planting interval, and the like. The traveling route is determined based on the reforestation area and the width of the reforestation machine 10. For example, the reforestation instruction unit 520 determines the traveling route according to the following procedure. The reforestation instruction unit 520 sets a plurality of reforestation target lines extending parallel with each other in the area of the reforestation area excluding the forest road area A1r. An interval between adjacent reforestation target lines is equal to an interval between the planting portions 134 of the reforestation machine 10. The reforestation instruction unit 520 determines the center of the reforestation target line corresponding to each set as the traveling route of the reforestation machine 10 by grouping three adjacent reforestation target lines into one set. The planting interval is an interval at which the plant body is planted in a traveling direction of the reforestation machine 10. The planting interval may be equal to the interval of the planting portions 134, or may be determined by a user. The traveling route may be set by the user based on the reforestation area, or may be automatically set by the reforestation planning device based on the reforestation area.

In addition, in a case in which the reforestation machine 10 is capable of traveling in the second area A2, the reforestation instruction unit 520 transmits, to an area other than the reforestation area, a reforestation instruction signal for instructing the planting of the plant body constituting the vegetation according to an environment of the target area T. The reforestation instruction unit 520 may store a table in which information representing the environment, for example, air temperature, precipitation amount, and altitude, is associated with the plant body constituting the vegetation in the environment in advance, and may specify the plant body constituting the vegetation from the environment of the target area. In addition, for example, the plant body constituting the vegetation according to the environment may be determined by an expert or the like.

### <<Process of Reforestation Planning Device 50>>

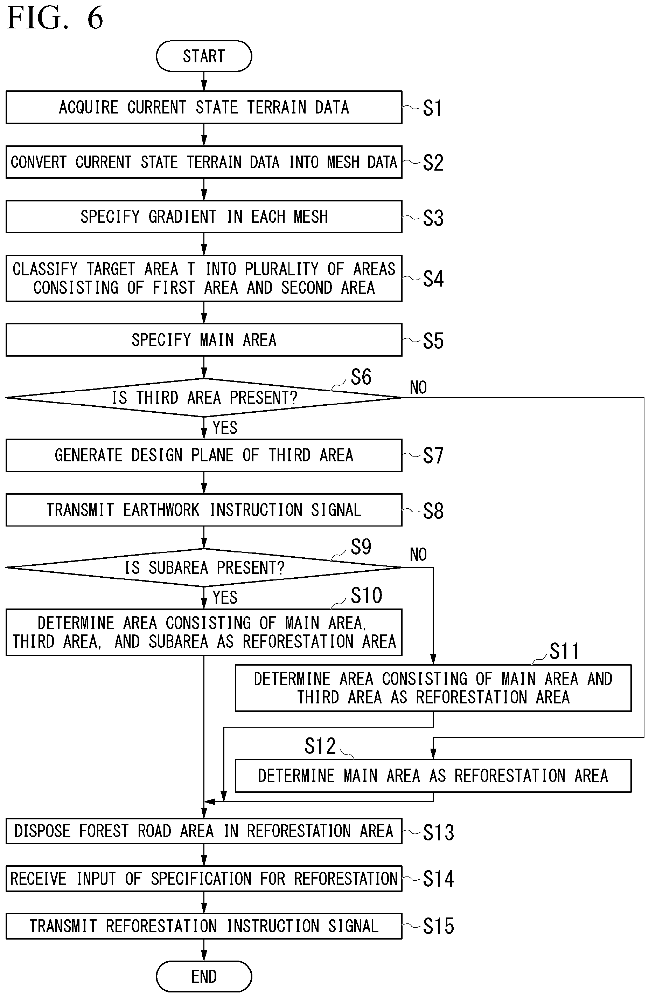

FIG. 6 is a flowchart showing the process of the reforestation planning device 50 according to the first embodiment.

The user activates the reforestation planning device 50 and inputs the current state terrain data of the target area T to the reforestation planning device 50. When the data acquisition unit 511 acquires the current state terrain data (step S1), the data conversion unit 512 converts the acquired current state terrain data into mesh data (step S2). Next, the gradient specification unit 513 specifies a gradient in each mesh indicated by the mesh data converted in step S2 (step S3).

The area classification unit 514 classifies the target area T into a plurality of areas consisting of the first area A1 and the second area A2 based on the gradient specified in step S3 (step S4). The area classification unit 514 specifies a largest area classified into the first area A1 among the plurality of areas as a main area A1m, which is the reforestation target (step S5).

The earthwork area specification unit 515 determines whether the third area A3, which is a continuous ground portion of the second area A2 that is adjacent to the main area A1m and is filled with a mesh where a gradient is less than the second gradient threshold value classified in step S4, is present (step S6). When the third area A3 is present (step S6: YES), the design plane generation unit 516 generates the design plane of the third area A3 specified in step S6 (step S7). The earthwork instruction unit 517 transmits, to the earthwork machine 30, the earthwork instruction signal, which includes the mesh data of the current state terrain converted in step S2 and the design plane data generated in step S7 (step S8).

The control device 34 of the earthwork machine 30 controls the traveling device 32 and the work equipment 33 in accordance with the earthwork instruction signal. As a result, the earthwork machine 30 performs the construction of the third area A3. In a case in which the difference between a terrain of the third area A3 and a terrain indicated by the design plane data is less than a predetermined threshold value, that is, in a case in which the construction of the third area A3 is completed, the control device 34 of the earthwork machine 30 transmits a completion signal to the reforestation planning device 50.

The reforestation area determination unit 518 determines whether the subarea A1s, which is the first area A1 adjacent to the third area A3 and is not the main area A1m, is present (step S9). When the subarea A1s is not present (step S9: NO), the reforestation area determination unit 518 determines a continuous ground area consisting of the main area A1m and the third area A3 as the reforestation area (step S10). On the other hand, when the subarea A1s is present (step S9: YES), the reforestation area determination unit 518 determines the continuous ground area consisting of the main area A1m, the third area A3, and the subarea A1s as the reforestation area (step S11).

On the other hand, when the third area A3 is not present (step S6: NO), the reforestation area determination unit 518 determines the main area A1m as the reforestation area (step S12).

The forest road determination unit 519 disposes the forest road area A1r in the reforestation area determined in step S10, step S11, or step S12 (step S13). The reforestation instruction unit 520 receives input of the specification for reforestation by the reforestation machine 10 from the user (step S14). Specifically, the reforestation instruction unit 520 receives the input of the traveling route of the reforestation machine 10, the type of plant body to be planted in the reforestation area, the type of plant body to be planted in an area other than the reforestation area, the planting depth of the plant body, and the planting interval of the plant body. The traveling route may be automatically determined based on the reforestation area and the width of the reforestation machine 10, or may be instructed by the user. The reforestation instruction unit 520 presents, as an option for the type of plant body to be planted in the reforestation area, the type of plant body suitable for timber, and presents, as an option for the type of plant body to be planted in an area other than the reforestation area, the type of plant body constituting the vegetation.

The reforestation instruction unit 520 transmits the reforestation instruction signal for instructing the planting of the plant body according to the specification input in step S14 (step S15). In a case in which the earthwork instruction signal is transmitted in step S8, the reforestation instruction unit 520 transmits the reforestation instruction signal after the control device 34 of the earthwork machine 30 receives the completion signal.

The control device 14 of the reforestation machine 10 controls the traveling device 12 and the planting device 13 in accordance with the reforestation instruction signal. As a result, the reforestation machine 10 performs reforestation. In a case in which all the traveling routes indicated by the reforestation instruction signal are traveled, that is, in a case in which the reforestation process is completed, the control device 14 of the reforestation machine 10 transmits a completion signal to the reforestation planning device 50.

### <<Action and Effect>>

As described above, according to the first embodiment, the reforestation planning device 50 classifies the target area T into the first area A1 having a gradient less than the first gradient threshold value and the second area A2 having a gradient equal to or greater than the first gradient threshold value based on the terrain data representing the terrain of the target area T, and transmits, to the reforestation machine 10, the reforestation instruction signal for instructing the planting of plant body in the first area A1. Since the first area A1 is an area in the target area T having a small gradient, by planting the plant body in the first area A1, it is possible to facilitate future work by the forestry machine, such as maintenance, that is, thinning and harvest of timber.

In addition, according to the first embodiment, the reforestation planning device 50 determines the forest road area A1r in the first area A1 forming the forest road and instructs the planting of plant body in an area other than the forest road area A1r in the first area A1. As a result, the reforestation planning device 50 can plant the plant body while securing a passage for the forestry machine. In other embodiments, in a case in which the forest road is determined in advance, the reforestation planning device 50 may not determine the forest road area A1r. In addition, in other embodiments where it is not necessary to provide the forest road, the reforestation planning device 50 may instruct the planting of plant body throughout the entire first area A1.

In addition, according to the first embodiment, the reforestation planning device 50 transmits, to the reforestation machine 10, the reforestation instruction signal for instructing the planting of the plant body constituting the vegetation according to the environment of the target area T in the second area A2. As a result, the reforestation planning device 50 can promote the maintenance of the vegetation in the target area T by planting the plant body constituting the vegetation in an area where future harvest is difficult. In other embodiments, when it is difficult for the reforestation machine 10 to travel in the second area A2, the reforestation planning device 50 may not transmit, to the reforestation machine 10, the reforestation instruction signal for instructing the planting of the plant body in the second area A2.

In addition, according to the first embodiment, the reforestation planning device 50 specifies the third area A3 having a gradient less than the second gradient threshold value in the second area A2, generates a design plane such that the gradient of the third area A3 is less than the first gradient threshold value, and transmits, to the earthwork machine 30, an earthwork instruction signal for instructing the construction of the third area A3 in accordance with the design plane. In addition, the reforestation planning device 50 transmits a reforestation instruction signal for instructing the planting of the plant body in the third area A3 after the construction. As a result, the reforestation planning device 50 can expand the area suitable for future harvest by the earthwork machine 30 and increase the number of planted plant bodies. That is, the reforestation planning device 50 can increase the future harvest amount. In other embodiments, in a case in which a sufficient harvest amount is expected from the reforestation in the first area A1, or a case in which the construction cost by the earthwork machine 30 exceeds the income from the harvest, the reforestation planning device 50 may not instruct the earthwork machine 30 to perform construction of the third area A3.

In addition, according to the first embodiment, the reforestation instruction unit 520 is configured to issue the reforestation instruction based on the traveling route for planting the plant body by the reforestation machine 10. However, the reforestation instruction unit 520 may also be configured with other forms. For example, the reforestation instruction unit 520 may issue the reforestation instruction based on the reforestation area instead of the traveling route of the reforestation machine 10, or may issue the reforestation instruction based on both the traveling route of the reforestation machine and the reforestation area.

### <Second Embodiment>

The reforestation machine 10 and the earthwork machine 30 constituting the reforestation system 1 according to the first embodiment are both unmanned vehicles. On the other hand, the reforestation machine 10 and the earthwork machine 30 constituting the reforestation system 1 according to a second embodiment are both manned vehicles.

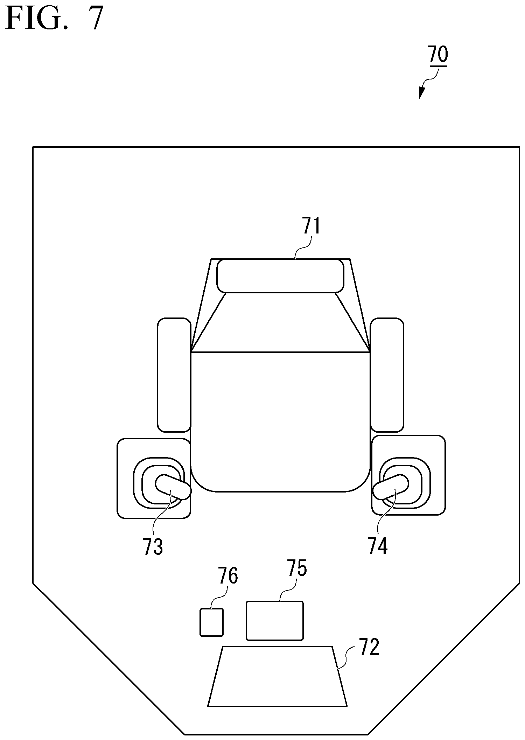

The reforestation machine 10 and the earthwork machine 30 according to the second embodiment each includes a cab 70. FIG. 7 is a diagram showing a configuration of the cab 70 according to the second embodiment.

The cab 70 is a space in which an operator rides and operates a work machine (reforestation machine 10 or earthwork machine 30) that includes the cab 70. The cab 70 is provided on an upper portion of the vehicle body.

A seat 71, a console 72, a work equipment operation lever 73, a traveling operation lever 74, a brake pedal 75, and a deceleration pedal 76 are provided inside the cab 70.

An operation panel, instruments, and switches are attached to the console 72. The operator can visually recognize the console 72 to confirm the state of the work machine. A control device of the work machine displays a screen showing an area to be worked on the console 72. For example, the control device 34 of the earthwork machine 30 may display, on the console 72, a map of the target area T with a different color for the third area and a side view showing the positional relationship between a line representing the height of the design plane and the work equipment 33. For example, the control device 34 of the reforestation machine 10 may display a map of the target area T representing the traveling path in the reforestation area on the console 72.

The work equipment operation lever 73 is an operation device for operating the planting device 13 in the reforestation machine 10 or the work equipment 33 in the earthwork machine 30. The work equipment operation lever 73 of the reforestation machine 10 is operated for lifting and lowering of the planting device 13, selection of the plant body, planting of the plant body, and the like. The work equipment operation lever 73 of the earthwork machine 30 is operated to set the movement amount of a lifting operation or a lowering operation of the work equipment. The work equipment operation lever 73 receives the lowering operation by being tilted forward and receives the lifting operation by being tilted rearward.

The traveling operation lever 74 is operated to set a traveling direction of a traveling device. The traveling operation lever 74 receives a forward traveling operation by being tilted forward and receives a rearward traveling operation by being tilted rearward. In addition, the traveling operation lever 74 receives a left swing operation by being tilted leftward and receives a right swing operation by being tilted rightward.

The brake pedal 75 is operated to brake the traveling device.

The deceleration pedal 76 is operated to reduce a rotation speed of the traveling device.

The process of the reforestation planning device 50 according to the second embodiment is the same as the process of the reforestation planning device 50 according to the first embodiment. Note that, in step S14 of the flowchart shown in FIG. 6, the reforestation instruction unit 520 of the reforestation planning device 50 may transmit the reforestation instruction signal without waiting for the control device 34 of the earthwork machine 30 to receive the completion signal.

As described above, in the reforestation system 1 according to the second embodiment, the operator can be instructed for reforestation in the first area in which future harvest of timber by forestry machine is facilitated, even when the reforestation machine 10 and the earthwork machine 30 are operated by the operator.

The reforestation machine 10 and the earthwork machine 30 constituting the reforestation system 1 according to the second embodiment are both manned vehicles, but the present disclosure is not limited to this. One of the reforestation machine 10 and the earthwork machine 30 may be a manned vehicle and the other may be an unmanned vehicle. In addition, the reforestation machine 10 or the earthwork machine 30 may be operated by a remote operation.

### <Other Embodiments>

Although the embodiments have been described in detail with reference to the drawings, a specific configuration is not limited to the above-described configuration, and various design changes and the like can be made. That is, in other embodiments, an order of the above-described processes may be appropriately changed. In addition, some processes may be executed in parallel.

The reforestation planning device 50 according to the embodiment described above may be configured by a single computer, or the configuration of the reforestation planning device 50 may be disposed to be divided into a plurality of computers and the plurality of computers may function as the reforestation planning device 50 by cooperating with each other. In this case, some of the computers constituting the reforestation planning device 50 may be mounted inside the reforestation machine 10 or the earthwork machine 30, and other computers may be provided outside the reforestation machine 10 or the earthwork machine 30.

In addition, in the embodiment described above, an example has been described in which reforestation is performed in an area where trees are not growing. Meanwhile, in other embodiments, the reforestation may be performed in an area where trees are already growing. In this case, the reforestation planning device 50 transmits a felling instruction signal to the forestry machine and a leveling instruction signal to the earthwork machine 30 before transmitting the reforestation instruction signal to the reforestation machine 10. In this case, the reforestation planning device 50 may set only the area being the reforestation target by the reforestation machine 10 as the work target of the forestry machine and the earthwork machine 30. In addition, in other embodiments, the reforestation planning device 50 may set the entire target area T as the work target of the forestry machine and the earthwork machine 30, and may acquire the current state terrain data after the work by the forestry machine and the earthwork machine 30 is finished.

### (Supplementary Note 1)

A reforestation planning device including:
a data acquisition unit configured to acquire terrain data representing a terrain of a target area;
an area specification unit configured to specify a first area having a gradient less than a first gradient threshold value from the target area based on the terrain data; and
a reforestation instruction unit configured to transmit a reforestation instruction signal, which is a signal for instructing planting of a plant body in a reforestation area consisting of the first area, including at least one of the reforestation area or a traveling route in the reforestation area for planting the plant body by a reforestation machine.

### (Supplementary Note 2)

The reforestation planning device according to Claim 1, further including:
a forest road determination unit configured to determine a forest road area forming a forest road in the first area,
in which the reforestation instruction unit is configured to transmit, to the reforestation machine, the reforestation instruction signal for instructing the planting of the plant body in an area other than the forest road area in the first area.

### (Supplementary Note 3)

The reforestation planning device according to Supplementary Note 1 or 2,
in which the area specification unit is configured to further specify a second area having a gradient equal to or greater than the first gradient threshold value, and
the reforestation instruction unit is configured to transmit, to the second area, a reforestation instruction signal for instructing planting of a plant body of a type different from the plant body to be planted in the first area.

### (Supplementary Note 4)

The reforestation planning device according to any one of Supplementary Notes 1 to 3, further including:
an earthwork area specification unit configured to specify a third area having a gradient equal to or greater than the first gradient threshold value and less than a second gradient threshold value;
a design plane generation unit configured to generate a design plane of the third area where the gradient is less than the first gradient threshold value; and
an earthwork instruction unit configured to transmit, to an earthwork machine, an earthwork instruction signal for instructing construction of the third area in accordance with the design plane,
in which the reforestation instruction unit is configured to transmit a reforestation instruction signal for instructing planting of a plant body in the third area after the construction in accordance with the design plane by the earthwork machine.

### (Supplementary Note 5)

The reforestation planning device according to Supplementary Note 4, in which the third area is an area adjacent to the first area.

### (Supplementary Note 6)

A reforestation system including:
the reforestation planning device according to any one of Claim 1 to Supplementary Note 5; and
the reforestation machine,
in which the reforestation machine includes
a planting device that plants a plant body into soil,
a traveling device that travels together with the planting device, and
a control device that causes the planting device to plant the plant body and the traveling device to travel an area indicated by the reforestation instruction signal.

### (Supplementary Note 7)

A reforestation system including:
the reforestation planning device according to Supplementary Note 4 or 5;
the reforestation machine; and
the earthwork machine,
in which the reforestation machine includes
a planting device that plants a plant body into soil,
a traveling device that travels together with the planting device, and a control device that causes the planting device to plant the plant body and the traveling device to travel an area indicated by the reforestation instruction signal, and
the earthwork machine includes
work equipment that excavates the soil,
a traveling device that travels together with the work equipment, and
a control device that causes the work equipment and the traveling device to perform construction with the soil based on the terrain data and the design plane of the third area indicated by the earthwork instruction signal.

### [Industrial Applicability]

According to the above aspect, it is possible to establish a reforestation plan in consideration of future forest work according to the terrain of the target area.

### [Reference Signs List]

1: Reforestation system
10: Reforestation machine
30: Earthwork machine
50: Reforestation planning device
51: Processor
511: Data acquisition unit
512: Data conversion unit
513: Gradient specification unit
514: Area classification unit
515: Earthwork area specification unit
516: Design plane generation unit
517: Earthwork instruction unit
518: Reforestation area determination unit
519: Forest road determination unit
520: Reforestation instruction unit
53: Main memory
55: Storage
57: Interface
A1: First area
A1m: Main area
A1r: Forest road area
A1s: Subarea
A2: Second area
A3: Third area
N: Communication network
T: Target area

## Claims

1. A reforestation planning device comprising:
a data acquisition unit configured to acquire terrain data representing a terrain of a target area;
an area specification unit configured to specify a first area having a gradient less than a first gradient threshold value from the target area based on the terrain data; and
a reforestation instruction unit configured to transmit a reforestation instruction signal, which is a signal for instructing planting of a plant body in a reforestation area consisting of the first area, including at least one of the reforestation area or a traveling route in the reforestation area for planting the plant body by a reforestation machine.

2. The reforestation planning device according to Claim 1, further comprising:
a forest road determination unit configured to determine a forest road area forming a forest road in the first area,
wherein the reforestation instruction unit is configured to transmit, to the reforestation machine, the reforestation instruction signal for instructing the planting of the plant body in an area other than the forest road area in the first area.

3. The reforestation planning device according to Claim 1 or 2,
wherein the area specification unit is configured to further specify a second area having a gradient equal to or greater than the first gradient threshold value, and
the reforestation instruction unit is configured to transmit, to the second area, a reforestation instruction signal for instructing planting of a plant body of a type different from the plant body to be planted in the first area.

4. The reforestation planning device according to Claim 1 or 2, further comprising:
an earthwork area specification unit configured to specify a third area having a gradient equal to or greater than the first gradient threshold value and less than a second gradient threshold value;
a design plane generation unit configured to generate a design plane of the third area where the gradient is less than the first gradient threshold value; and
an earthwork instruction unit configured to transmit, to an earthwork machine, an earthwork instruction signal for instructing construction of the third area in accordance with the design plane,
wherein the reforestation instruction unit is configured to transmit a reforestation instruction signal for instructing planting of a plant body in the third area after the construction in accordance with the design plane by the earthwork machine.

5. The reforestation planning device according to Claim 4,
wherein the third area is an area adjacent to the first area.

6. A reforestation system comprising:
the reforestation planning device according to Claim 1 or 2; and
the reforestation machine,
wherein the reforestation machine includes
a planting device that plants a plant body into soil,
a traveling device that travels together with the planting device, and
a control device that causes the planting device to plant the plant body and the traveling device to travel an area indicated by the reforestation instruction signal.

7. A reforestation system comprising:
the reforestation planning device according to Claim 4;
the reforestation machine; and
the earthwork machine,
wherein the reforestation machine includes
a planting device that plants a plant body into soil,
a traveling device that travels together with the planting device, and
a control device that causes the planting device to plant the plant body and the traveling device to travel an area indicated by the reforestation instruction signal, and
the earthwork machine includes
work equipment that excavates the soil,
a traveling device that travels together with the work equipment, and
a control device that causes the work equipment and the traveling device to perform construction with the soil based on the terrain data and the design plane of the third area indicated by the earthwork instruction signal.

8. A reforestation planning method comprising:
a step of acquiring terrain data representing a terrain of a target area;
a step of specifying a first area having a gradient equal to or greater than a first gradient threshold value from the target area based on the terrain data; and
a step of transmitting a reforestation instruction signal, which is a signal for instructing planting of a plant body in a reforestation area including the first area, including at least one of the reforestation area or a traveling route of a reforestation machine in the reforestation area.

9. The reforestation planning method according to Claim 8, further comprising:
a step of specifying a third area having a gradient equal to or greater than the first gradient threshold value and less than a second gradient threshold value;
a step of generating a design plane of the third area where the gradient is less than the first gradient threshold value; and
a step of transmitting, to an earthwork machine, an earthwork instruction signal for instructing construction of the third area in accordance with the design plane,
wherein, in the step of transmitting the reforestation instruction signal, a reforestation instruction signal for instructing planting of a plant body in the third area after the construction is further transmitted.
